# EUROPÄISCHE PATENTSCHRIFT

(11) **EP 2 824 393 B1**
(45) Veröffentlichungstag und Bekanntmachung des Hinweises auf die Patenterteilung: **24.05.2023**
(21) Anmeldenummer: 14173904.5
(22) Anmeldetag: 25.06.2014
(51) Int. Cl.: F24C 7/08, A47J 36/32, A47J 45/00

(54) **Kochfeldvorrichtung**
Hotplate device
Dispositif de plaque de cuisson

(30) Priorität: 09.07.2013 ES 201331040
(43) Veröffentlichungstag der Anmeldung: 14.01.2015
(73) Patentinhaber: BSH Hausgeräte GmbH, 81739 München (DE)
(72) Erfinder: Garcia Martinez, Jose Andres, 50014 Zaragoza (ES); Mir Bel, Jorge, 50019 Zaragoza (ES); Palacios Tomas, Daniel, 50008 Zaragoza (ES); Valeau Martin, David, 50010 Zaragoza (ES)

(56) Entgegenhaltungen:
- EP-A1- 1 580 487
- EP-A1- 2 583 749
- WO-A1-96/31739
- GB-A- 2 468 348
- JP-A- 2011 058 782
- US-A1- 2006 207 986

## Beschreibung

Die Erfindung betrifft ein Kochfeld nach dem Patentanspruch 1.

Aus dem Stand der Technik, beispielsweise der Druckschrift EP 2 583 749 A1, ist bereits ein Kochfeld gemäß dem Oberbegriff des Patentanspruchs 1 bekannt.

Aus der Druckschrift GB 2 468 348 A ist eine Pfanne bekannt, die einen Temperatursensor umfasst und die es ermöglicht, Überhitzungen von in der Pfanne befindlichem Gargut zu verhindern.

Die Druckschrift WO 9 631 739 A1 offenbart eine Leistungssteuerungsvorrichtung auf der Grundlage einer automatischen Temperaturmessung, wobei ein Deckel mindestens eines Topfes mit einer abnehmbaren tragbaren Einheit zur Temperaturmessung versehen ist, die durch eine Ein- oder Zweiwegekommunikation mit einer zentralen elektronischen Einheit verbunden ist, wobei die zentrale elektronische Einheit mit einem Kontrollabschnitt und mit einer Stromquelle verbunden ist.

Die Druckschrift US 2006 207 986 A1 beschreibt ein Behältnis zum Erwärmen von Flüssigkeiten, das einen Prozessor aufweist, mittels dem die Temperatur in dem Behältnis auf einen vorgegebenen Wert einstellbar ist.

Die Druckschrift EP 1 580 487 A1 offenbart ein Kochfeld mit mehreren Kochstellen und zugeordneten Heizungen, welches derart ausgebildet ist, dass zugeordnete induktive oder kapazitive Kochgefäßerkennungs-Sensoren das Berühren eines aufgestellten Kochgefäßes durch einen Finger als solches erkennen. Die Aufgabe der Erfindung besteht insbesondere darin, eine gattungsgemäße Vorrichtung mit verbesserten Eigenschaften hinsichtlich einer kostengünstigen Ausgestaltung und/oder eines hohen Komforts für einen Bediener bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Druckschrift JP2011058782 offenbart ein Kochgeschirr mit Beschleunigungssensor.

Es wird ein Kochfeld mit zumindest einer Kochfeldvorrichtung mit zumindest einem Bedienteil, das dazu vorgesehen ist, zumindest in einem Betriebszustand mit zumindest einem Gargeschirr verbunden zu sein, und mit zumindest einer Sensoreinheit, die dazu vorgesehen ist, zumindest in einem Betriebszustand zumindest eine Bewegung des Bedienteils zu detektieren, vorgeschlagen. Unter einem "Bedienteil" soll insbesondere eine Einheit verstanden werden, die dazu vorgesehen ist, zumindest in einem Betriebszustand von einem Bediener zu einer Handhabung des Gargeschirrs und/oder zu einer Bedienung zumindest einer weiteren Einheit, beispielsweise einer Eingabeeinheit, verwendet zu werden. Beispielsweise könnte das Bedienteil als Deckel des Gargeschirrs ausgebildet sein. Ebenfalls denkbar ist, dass das Bedienteil als ein Kontaktmodul, das zumindest in einem Betriebszustand mit dem Gargeschirr verbunden ist, ausgebildet ist. Erfindungsgemäß ist das Bedienteil zumindest im Wesentlichen, insbesondere komplett, als ein Gargeschirrhandgriff ausgebildet. Unter einem "Gargeschirrhandgriff" soll insbesondere eine Einheit verstanden werden, die dazu vorgesehen ist, in zumindest einem, insbesondere jedem Betriebszustand einen Transport zumindest eines Gargeschirrs, an dem der Gargeschirrhandgriff zumindest in befestigtem Zustand abnehmbar befestigt ist, durch einen Bediener zu ermöglichen. Insbesondere umfasst der Gargeschirrhandgriff zumindest ein Trägerbauteil, das dazu vorgesehen ist, zumindest eine Gewichtskraft weiterer Bauteile, insbesondere der Sensoreinheit und/oder einer Auswerteeinheit, zumindest teilweise zu tragen und/oder zu halten. Insbesondere ist das Trägerbauteil dazu vorgesehen, zumindest eine Gestalt und/oder Form des Gargeschirrhandgriffs zu definieren. Insbesondere ist das Trägerbauteil zumindest im Wesentlichen einstückig mit einem Handgriffgehäuse ausgebildet. Alternativ ist denkbar, dass das Bedienteil, insbesondere der Gargeschirrhandgriff, zumindest ein Handgriffgehäuse aufweist, das das Trägerbauteil zumindest teilweise umgibt. Insbesondere ist das Trägerbauteil zumindest teilweise aus einem Material mit geringer Wärmeleitfähigkeit ausgebildet. Insbesondere ist das Trägerbauteil zumindest teilweise aus Kunststoff ausgebildet. Beispielsweise könnte das Trägerbauteil aus Silikon, Teflon und/oder Aramid ausgebildet sein. Ebenfalls denkbar ist, dass das Trägerbauteil zumindest teilweise aus Holz und/oder Keramik ausgebildet ist. Alternativ sind weitere, einem Fachmann als sinnvoll erscheinende Materialien denkbar. Insbesondere umfasst der Gargeschirrhandgriff zumindest ein Kontaktelement, das zumindest in befestigtem Zustand an dem Trägerbauteil angeordnet und dazu vorgesehen ist, zumindest eine Verbindung zwischen dem Trägerbauteil und zumindest einem Gargeschirr, an dem der Gargeschirrhandgriff zumindest in befestigtem Zustand abnehmbar befestigt ist, herzustellen und/oder auszubilden. Insbesondere umgreift das Kontaktelement zumindest eine Krempe, insbesondere eine Kante, des Gargeschirrs zumindest teilweise. Insbesondere ist das Kontaktelement an dem Trägerbauteil befestigt, beispielsweise durch eine Klebeverbindung. Alternativ könnte das Kontaktelement an dem Trägerbauteil mittels zumindest einer Schraubverbindung und/oder zumindest einer Rastverbindung und/oder zumindest einer Klemmverbindung befestigt sein. Zudem sind weitere, einem Fachmann als sinnvoll erscheinende Verbindungsarten denkbar. Insbesondere ist das Kontaktelement zumindest im Wesentlichen elastisch ausgebildet. Insbesondere ist das Kontaktelement zumindest teilweise aus Gummi ausgebildet. Alternativ oder zusätzlich könnte das Kontaktelement zumindest teilweise aus Metall und/oder Silikon und/oder Kunststoff ausgebildet sein. Ebenfalls denkbar sind weitere, einem Fachmann als sinnvoll erscheinende Materialien. Unter der Wendung, dass das Bedienteil dazu vorgesehen ist, zumindest in einem Betriebszustand mit zumindest einem Gargeschirr "verbunden" zu sein, soll insbesondere verstanden werden, dass das Bedienteil dazu vorgesehen ist, zumindest in einem Betriebszustand an dem Gargeschirr angeordnet und/oder vorteilhaft an dem Gargeschirr befestigt zu sein. Insbesondere ist das Bedienteil dazu vorgesehen, zumindest in einem Betriebszustand in direktem, insbesondere einander berührendem Kontakt mit dem Gargeschirr angeordnet zu sein. Unter einer "Sensoreinheit" soll insbesondere eine Einheit mit zumindest einem Sensorelement verstanden werden, das dazu vorgesehen ist, zumindest in einem Betriebszustand zumindest eine Bewegung zu detektieren, insbesondere zu messen. Insbesondere ist das Sensorelement dazu vorgesehen, zumindest eine Position des Bedienteils und/oder zumindest eine Positionsänderung des Bedienteils und/oder zumindest eine Geschwindigkeitsänderung des Bedienteils zu detektieren. Insbesondere ist die Bewegung zumindest als eine Positionsänderung und/oder als eine Geschwindigkeitsänderung ausgebildet. Beispielsweise könnte die Bewegung als eine Kippbewegung und/oder als eine Bewegung des Gargeschirrs in eine Richtung, insbesondere in eine zumindest im Wesentlichen parallel zu einer Ausrichtung des Bedienteils ausgerichtete Richtung, und/oder als eine Drehbewegung ausgebildet sein. Alternativ sind weitere, einem Fachmann als sinnvoll erscheinende Bewegungen denkbar. Insbesondere ist die Sensoreinheit getrennt von einer Heizeinheit und/oder einem Topferkennungssystem ausgebildet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Erfindungsgemäß ist vorgesehen, dass die Sensoreinheit zumindest einen Beschleunigungssensor zu einer Detektion der Bewegung des Bedienteils aufweist. Unter einem "Beschleunigungssensor" soll insbesondere zumindest ein Element verstanden werden, das dazu vorgesehen ist, zumindest eine Trägheitskraft, die auf das Bedienteil einwirkt, zu detektieren. Insbesondere ist die Sensoreinheit dazu vorgesehen, mittels der Trägheitskraft zumindest eine Geschwindigkeitsveränderung, insbesondere eine Zunahme und/oder eine Abnahme einer Geschwindigkeit, des Bedienteils zu bestimmen. Insbesondere weist die Kochfeldvorrichtung zumindest eine Kochfeld-Steuereinheit zu einer Auswertung der von der Sensoreinheit detektierten Bewegung des Bedienteils auf. Alternativ zu einer Ausgestaltung, in der die Kochfeld-Steuereinheit zu einer Auswertung der von der Sensoreinheit detektierten Bewegung des Bedienteils vorgesehen ist, ist denkbar, dass die Sensoreinheit zumindest eine Auswerteeinheit zumindest zu einer Auswertung der von der Sensoreinheit detektierten Bewegung des Bedienteils aufweist. Alternativ oder zusätzlich zu einer Ausgestaltung mittels des Beschleunigungssensors ist denkbar, dass das Bedienteil zumindest einen Ultraschallsender und die Sensoreinheit, die zumindest teilweise an der Platteneinheit angeordnet ist, zumindest einen Ultraschallempfänger aufweist. Hierbei ist die Sensoreinheit dazu vorgesehen, zumindest eine Bewegung des Bedienteils zu detektieren, indem die Sensoreinheit eine Laufzeit des Bedienteils und/oder unterschiedliche Positionen des Bedienteils detektiert. Dadurch kann insbesondere eine Bewegung des Bedienteils in einer präzisen und/oder kostengünstigen Weise erfolgen.

Durch die erfindungsgemäße Ausgestaltung kann insbesondere eine kostengünstige Ausgestaltung und/oder ein hoher Komfort für einen Bediener erreicht werden. Insbesondere kann auf weitere Bauteile zu einer Detektion einer Bewegung des Bedienteils und/oder des Gargeschirrs, beispielsweise auf ein Topferkennungssystem, verzichtet werden. Zudem kann vorteilhaft eine platzsparende Anordnung des Bedienteils und/oder ein hoher Bedienkomfort erreicht werden.

Ferner wird vorgeschlagen, dass die Sensoreinheit zumindest teilweise, insbesondere zumindest größtenteils, vorteilhaft komplett, innerhalb des Bedienteils angeordnet ist. Unter der Wendung, dass die Sensoreinheit zumindest teilweise "innerhalb" des Bedienteils angeordnet ist, soll insbesondere verstanden werden, dass die Sensoreinheit Bestandteil des Bedienteils, insbesondere einer von dem Bedienteil gebildeten Einheit, ist. Insbesondere ist die Sensoreinheit in dem Bedienteil, insbesondere in einer von dem Bedienteil gebildeten Einheit, integriert. Insbesondere ist die Sensoreinheit mit dem Trägerbauteil des Bedienteils verbunden und/oder von dem Trägerbauteil des Bedienteils umgeben. Alternativ oder zusätzlich ist denkbar, dass unter der Wendung, dass die Sensoreinheit zumindest teilweise "innerhalb" des Bedienteils angeordnet ist, insbesondere verstanden werden soll, dass das Bedienteil die Sensoreinheit bezüglich eines Schwerpunkts der Sensoreinheit in zumindest einer, insbesondere beliebigen Ebene über einen Winkelbereich von mehr als 180°, insbesondere von mehr als 270°, vorteilhaft von mehr als 330°, vorzugsweise komplett, umgibt. Alternativ ist denkbar, dass die Sensoreinheit zumindest teilweise an zumindest einer Platteneinheit, insbesondere einer Kochfeldplatte, angeordnet ist. Dadurch kann insbesondere eine preiswerte und/oder platzsparende Ausgestaltung erreicht werden.

Zudem wird vorgeschlagen, dass die Sensoreinheit zumindest einen Beschleunigungssensor zu einer Detektion der Bewegung des Bedienteils aufweist. Unter einem "Beschleunigungssensor" soll insbesondere zumindest ein Element verstanden werden, das dazu vorgesehen ist, zumindest eine Trägheitskraft, die auf das Bedienteil einwirkt, zu detektieren. Insbesondere ist die Sensoreinheit dazu vorgesehen, mittels der Trägheitskraft zumindest eine Geschwindigkeitsveränderung, insbesondere eine Zunahme und/oder eine Abnahme einer Geschwindigkeit, des Bedienteils zu bestimmen. Insbesondere weist die Kochfeldvorrichtung zumindest eine Kochfeld-Steuereinheit zu einer Auswertung der von der Sensoreinheit detektierten Bewegung des Bedienteils auf. Alternativ zu einer Ausgestaltung, in der die Kochfeld-Steuereinheit zu einer Auswertung der von der Sensoreinheit detektierten Bewegung des Bedienteils vorgesehen ist, ist denkbar, dass die Sensoreinheit zumindest eine Auswerteeinheit zumindest zu einer Auswertung der von der Sensoreinheit detektierten Bewegung des Bedienteils aufweist. Alternativ oder zusätzlich zu einer Ausgestaltung mittels des Beschleunigungssensors ist denkbar, dass das Bedienteil zumindest einen Ultraschallsender und die Sensoreinheit, die zumindest teilweise an der Platteneinheit angeordnet ist, zumindest einen Ultraschallempfänger aufweist. Hierbei ist die Sensoreinheit dazu vorgesehen, zumindest eine Bewegung des Bedienteils zu detektieren, indem die Sensoreinheit eine Laufzeit des Bedienteils und/oder unterschiedliche Positionen des Bedienteils detektiert. Dadurch kann insbesondere eine Bewegung des Bedienteils in einer präzisen und/oder kostengünstigen Weise erfolgen.

Die Kochfeldvorrichtung weist zumindest eine Kochfeld-Steuereinheit auf, die zu einer Kommunikation mit zumindest einem Sendemodul der Sensoreinheit vorgesehen ist. Unter einer "Kochfeld-Steuereinheit" soll eine elektronische Einheit verstanden werden, die in einer Steuer- und/oder Regeleinheit des Kochfelds integriert ist und die vorzugsweise dazu vorgesehen ist, zumindest Heizeinheiten, insbesondere des Kochfelds, alternativ der Kochfeldvorrichtung, zu steuern und/oder zu regeln. Vorzugsweise umfasst die Kochfeld-Steuereinheit eine Recheneinheit und insbesondere zusätzlich zur Recheneinheit eine Kochfeld-Speichereinheit mit einem darin gespeicherten Steuer- und/oder Regelprogramm, das dazu vorgesehen ist, von der Recheneinheit ausgeführt zu werden. Insbesondere ist die Kochfeld-Steuereinheit zumindest teilweise, insbesondere größtenteils, vorteilhaft komplett, an der Platteneinheit angeordnet. Insbesondere weist die Kochfeld-Steuereinheit zumindest ein Empfangsmodul zu einem Empfang zumindest einer von der Sensoreinheit übertragenen Kenngröße auf. Insbesondere weist die Sensoreinheit zumindest ein Sendemodul zu einer Übertragung zumindest einer Kenngröße an die Kochfeld-Steuereinheit, insbesondere zu einer Kommunikation mit der Kochfeld-Steuereinheit, auf. Insbesondere sind die Sensoreinheit und die Kochfeld-Steuereinheit dazu vorgesehen, die Kenngröße drahtlos zu übertragen. Insbesondere sind die Sensoreinheit und die Kochfeld-Steuereinheit zu einer drahtlosen Kommunikation vorgesehen. Beispielsweise könnte die Kenngröße als eine von der Sensoreinheit detektierte Bewegung des Bedienteils ausgebildet sein. Insbesondere ist die Kenngröße als Befehl zu einer Ausführung zumindest einer Aktion ausgebildet. Insbesondere ist die Kochfeld-Steuereinheit dazu vorgesehen, in Abhängigkeit von durch die Sensoreinheit detektierten Bewegungen des Bedienteils unterschiedliche Aktionen auszuführen. Insbesondere ist zumindest eine der Aktionen als zumindest eine Leistungsveränderung, insbesondere einer Heizleistung und/oder einer Heizleistungsdichte, vorteilhaft einer Heizleistungsstufe, ausgebildet. Insbesondere ist zumindest eine der Aktionen als zumindest eine Änderung einer Garzeit ausgebildet. Insbesondere ist zumindest eine der Aktionen als zumindest eine Änderung eines Aktivierungszustands, insbesondere als eine Aktivierung und/oder Deaktivierung, einer dem Gargeschirr zugeordneten Heizeinheit ausgebildet. Insbesondere ist zumindest eine der Aktionen als zumindest eine Auswahl zumindest eines Gargeschirrs ausgebildet.

Insbesondere ist in der Kochfeld-Speichereinheit zu einer bestimmten Bewegung des Bedienteils eine vordefinierte bestimmte Aktion der Kochfeld-Steuereinheit gespeichert. Alternativ oder zusätzlich ist denkbar, dass in der Kochfeld-Speichereinheit zu einer bestimmten Bewegung eine bestimmte Aktion der Kochfeld-Steuereinheit durch einen Bediener speicherbar ist. Dadurch kann insbesondere eine flexible und/oder platzsparende Ausgestaltung erreicht werden.

Ferner wird vorgeschlagen, dass das Bedienteil dazu vorgesehen ist, zumindest in einem Betriebszustand abnehmbar mit dem Gargeschirr verbunden zu sein. Unter der Wendung, dass das Bedienteil dazu vorgesehen ist, zumindest in einem Betriebszustand "abnehmbar" mit dem Gargeschirr verbunden zu sein, soll insbesondere verstanden werden, dass das Bedienteil dazu vorgesehen ist, zumindest in einem Betriebszustand werkzeuglos trennbar und/oder zerstörungsfrei trennbar mit dem Gargeschirr verbunden zu sein. Insbesondere ist das Bedienteil dazu vorgesehen, zumindest in einem ersten Betriebszustand mit zumindest einem ersten Gargeschirr und zumindest in einem zweiten Betriebszustand mit zumindest einem zweiten Gargeschirr, das insbesondere von dem ersten Gargeschirr getrennt ausgebildet ist, verbunden zu sein. Insbesondere ist das Bedienteil dazu vorgesehen, zumindest in einem Betriebszustand mittels zumindest einer Klemmverbindung und/oder zumindest einer Rastverbindung mit dem Gargeschirr verbunden zu sein. Ebenfalls denkbar ist zumindest eine magnetische Verbindung und/oder eine Verbindung mittels Saug-Knöpfen und/oder mittels zumindest einer Feder. Alternativ sind weitere, einem Fachmann als sinnvoll erscheinende Befestigungsmöglichkeiten denkbar. Dadurch kann insbesondere eine flexible Ausgestaltung erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Kochfeld mit einer Kochfeldvorrichtung in einer schematischen Draufsicht,
- Fig. 2: das erfindungsgemäße Kochfeld mit der Kochfeldvorrichtung aus Fig. 1 in einer schematischen Seitenansicht,
- Fig. 3: eine schematische Darstellung eines Gargeschirrs in einer Bewegungsstellung in einer schematischen Seitenansicht,
- Fig. 4: eine schematische Darstellung eines Gargeschirrs in einer weiteren Bewegungsstellung in einer schematischen Seitenansicht,
- Fig. 5: eine schematische Darstellung eines Gargeschirrs in einer weiteren Bewegungsstellung in einer schematischen Draufsicht,
- Fig. 6: eine schematische Darstellung eines Gargeschirrs in einer weiteren Bewegungsstellung in einer schematischen Seitenansicht,
- Fig. 7: eine schematische Darstellung eines Ausschnitts des Kochfelds aus Fig. 1 mit einem Gargeschirr in einer weiteren Bewegungsstellung in einer schematischen Seitenansicht und
- Fig. 8: eine schematische Darstellung des Kochfelds aus Fig. 1 in einer schematischen Draufsicht, wobei zwei Positionen eines Gargeschirrs dargestellt sind.

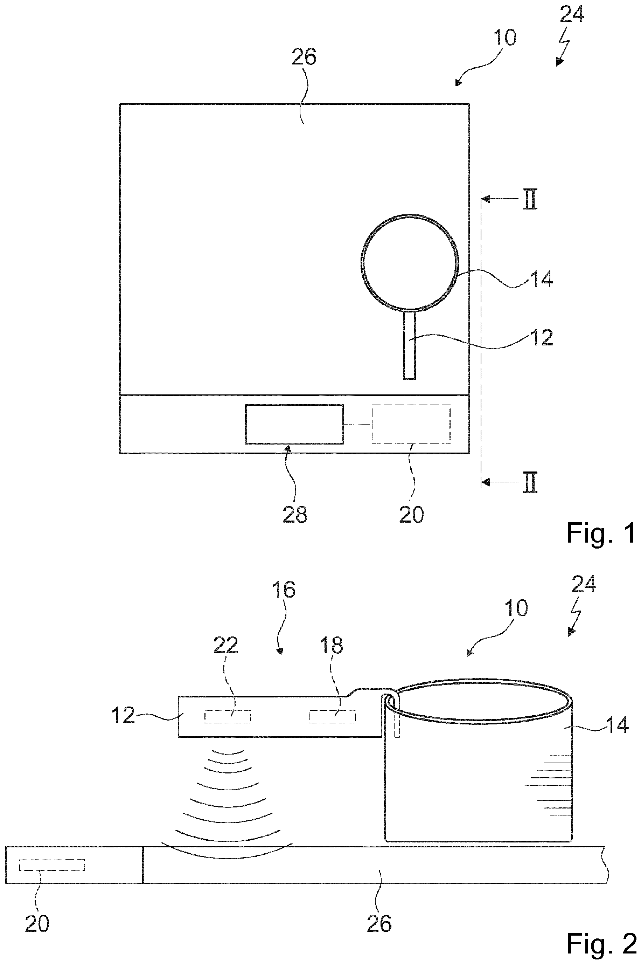

Fig. 1 zeigt ein erfindungsgemäßes Kochfeld 24, das als ein Induktionskochfeld ausgebildet ist, mit einer Kochfeldvorrichtung 10, die als eine Induktionskochfeldvorrichtung ausgebildet ist. Das Kochfeld 24 weist eine Platteneinheit 26 zu einem Aufstellen von Gargeschirren 14 auf. Die Platteneinheit 26 ist als eine Kochfeldplatte ausgebildet. Das Kochfeld 24 weist mehrere Heizeinheiten (nicht dargestellt) auf, die unterhalb der Platteneinheit 26 angeordnet sind. Die Heizeinheiten, die als Induktionsheizeinheiten ausgebildet sind, sind jeweils dazu vorgesehen, ein auf der Platteneinheit 26 oberhalb der Heizeinheiten aufgestelltes Gargeschirr 14 zu erhitzen. Die Kochfeldvorrichtung 10 weist in einem in eingebautem Zustand einem Bediener zuweisenden Bereich eine Kochfeld-Bedieneinheit 28 zu einer Eingabe von Betriebsparametern auf. Beispielsweise sind die Betriebsparameter als Auswahl und/oder Veränderung einer Heizzone und/oder als eine Einstellung einer Heizleistung und/oder Heizleistungsdichte einer Heizzone ausgebildet. Ebenfalls denkbar ist, dass die Betriebsparameter als Auswahl und/oder Veränderung einer Garzeit und/oder eines Garprogramms ausgebildet sind. Alternativ sind weitere, einem Fachmann als sinnvoll erscheinende Ausbildungen des Betriebsparameters denkbar. Die Kochfeld-Bedieneinheit 28 ist zu einer optischen Ausgabe einer Kenngröße an einen Bediener vorgesehen. Alternativ oder zusätzlich ist denkbar, dass die Kochfeld-Bedieneinheit zu einer akustischen Ausgabe einer Kenngröße an einen Bediener vorgesehen ist. Die Kochfeldvorrichtung 10 weist eine Kochfeld-Steuereinheit 20 auf, die dazu vorgesehen ist, in Abhängigkeit der mittels der Kochfeld-Bedieneinheit 28 eingegebenen Betriebsparameter Aktionen auszuführen und/oder Einstellungen zu verändern. Die Kochfeld-Steuereinheit 20 ist dazu vorgesehen, von dem Gargeschirr 14 bedeckte Heizeinheiten zu einer gemeinsamen Heizzone zusammenzufassen, die dem Gargeschirr 14 zugeordnet ist.

Die Kochfeldvorrichtung 10 umfasst ein Bedienteil 12, das dazu vorgesehen ist, in einem Betriebszustand mit einem Gargeschirr 14 verbunden zu sein. Das Bedienteil 12, das im Wesentlichen als ein Gargeschirrhandgriff ausgebildet ist, ist dazu vorgesehen, abwechselnd mit mehreren Gargeschirren 14 verbunden zu sein. Somit ist eine flexible Anwendung des Bedienteils 12 erreichbar. Das Bedienteil 12 ist dazu vorgesehen, in einem Betriebszustand abnehmbar mit dem Gargeschirr 14 verbunden zu sein. Das Bedienteil 12 ist in einem Betriebszustand mit dem Gargeschirr 14 mittels einer Klemmverbindung verbunden. Das Bedienteil 12 ist dazu vorgesehen, in einem Betriebszustand wieder verwendbar mit dem Gargeschirr 14 verbunden zu sein.

Die Kochfeldvorrichtung 10 umfasst eine Sensoreinheit 16, die dazu vorgesehen ist, in einem Betriebszustand eine Bewegung des Bedienteils 12 zu detektieren. Beispielsweise ist denkbar, dass die Sensoreinheit in der Kochfeld-Steuereinheit teilweise integriert ist und lediglich ein Sender, beispielsweise ein Ultraschallsender, in dem Bedienteil angeordnet ist. Im vorliegenden Ausführungsbeispiel ist die Sensoreinheit 16 teilweise innerhalb des Bedienteils 12 angeordnet. Die Sensoreinheit 16 weist ein Sendemodul 22 zu einer Kommunikation mit der Kochfeld-Steuereinheit 20 auf. Die Kochfeld-Steuereinheit 20 weist ein Empfangsmodul (nicht dargestellt) zu einer Kommunikation mit der Sensoreinheit 16 auf. Somit ist die Kochfeld-Steuereinheit 20 zu einer Kommunikation mit dem Sendemodul 22 der Sensoreinheit 16 vorgesehen. Die Sensoreinheit 16 und die Kochfeld-Steuereinheit 20 sind zu einer drahtlosen Kommunikation vorgesehen.

Die Sensoreinheit 16 weist einen Beschleunigungssensor 18 zu einer Detektion der Bewegung des Bedienteils 12 auf. Der Beschleunigungssensor 18 ist innerhalb des Bedienteils 12 angeordnet. Die Kochfeld-Steuereinheit 20 ist zu einer Auswertung der von dem Beschleunigungssensor 18 detektierten Bewegung des Bedienteils 12 vorgesehen. Die Kochfeld-Steuereinheit 20 ist dazu vorgesehen, in Abhängigkeit einer von der Sensoreinheit 16 detektierten Bewegung des Bedienteils 12 unterschiedliche der Bewegung zugeordnete Aktionen auszuführen. Die Kochfeld-Steuereinheit 20 weist eine Kochfeld-Speichereinheit (nicht dargestellt) auf, in der zu unterschiedlichen von dem Beschleunigungssensor 18 detektierten Bewegungen unterschiedliche Aktionen gespeichert sind. Zusätzlich hierzu sind in der Kochfeld-Speichereinheit der Kochfeld-Steuereinheit 20 durch einen Bediener mittels der Kochfeld-Bedieneinheit 28 weitere, einer Bewegung des Bedienteils 12 zugeordnete Aktionen speicherbar.

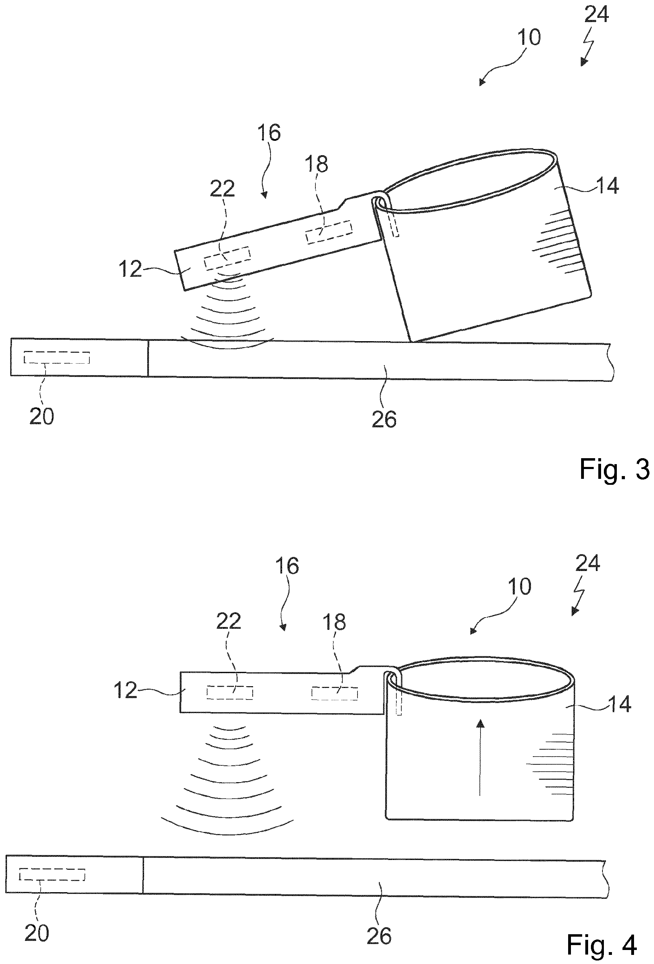

In einem Verfahren zum Betrieb der Kochfeldvorrichtung 10 wird in einem ersten Verfahrensschritt das Bedienteil 12 mit dem Gargeschirr 14 verbunden. Zu einer Auswahl des Gargeschirrs 14, mit dem das Bedienteil 12 verbunden ist, wird mittels des Bedienteils 12 eine Kippbewegung des Gargeschirrs 14 ausgeführt (vgl. Fig. 3). Im vorliegenden Ausführungsbeispiel wird die Kippbewegung des Gargeschirrs 14 auf der Platteneinheit 26 ausgeführt, wobei das Gargeschirr 14 auf eine Seitenkante einer Bodenseite des Gargeschirrs 14 gestellt wird (vgl. Fig. 3). Hierbei wird das Bedienteil 12 in Richtung der Platteneinheit 26 bewegt. Alternativ ist denkbar, dass die Kippbewegung des Bedienteils unter Vermeidung eines Kontakts zu der Platteneinheit, insbesondere in der Luft, ausgeführt wird. Eine der Bewegung des Bedienteils 12 zugeordnete Aktion ist als eine Änderung eines Aktivierungszustands einer dem Gargeschirr 14 zugeordneten Heizeinheit ausgebildet. In Abhängigkeit einer derartigen Bewegung des Bedienteils 12 aktiviert die Kochfeld-Steuereinheit 20 dem Gargeschirr 14 zugeordnete Heizeinheiten. Bei einem späteren Anheben des Bedienteils 12 deaktiviert die Kochfeld-Steuereinheit 20 dem Gargeschirr 14 zugeordnete Heizeinheiten (vgl. Fig. 4).

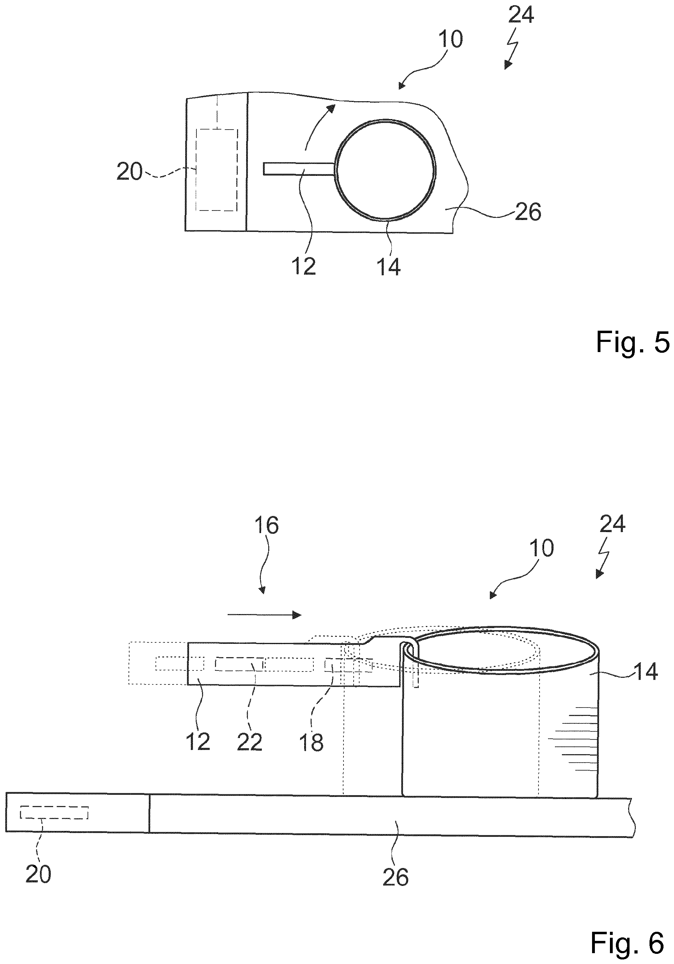

Eine einer Bewegung des Bedienteils 12 zugeordnete Aktion ist als eine Leistungsveränderung ausgebildet. Wird das Bedienteil 12 in einer im Wesentlichen parallel zu der Platteneinheit 26 ausgerichteten Ebene um einen Schwerpunkt des Gargeschirrs 14 gedreht (vgl. Fig. 5), so verändert die Kochfeld-Steuereinheit 20 eine dem Gargeschirr 14 zugeführte Heizleistungsdichte. In Abhängigkeit der Drehbewegung des Bedienteils 12 um den Schwerpunkt des Gargeschirrs 14 stellt die Kochfeld-Steuereinheit 20 eine dem Gargeschirr 14 zugeführte Heizleistungsdichte ein. Bei einer Drehbewegung im Uhrzeigersinn erhöht die Kochfeld-Steuereinheit 20 die Heizleistung, bei einer Drehbewegung entgegen dem Uhrzeigersinn verringert die Kochfeld-Steuereinheit 20 die Heizleistung.

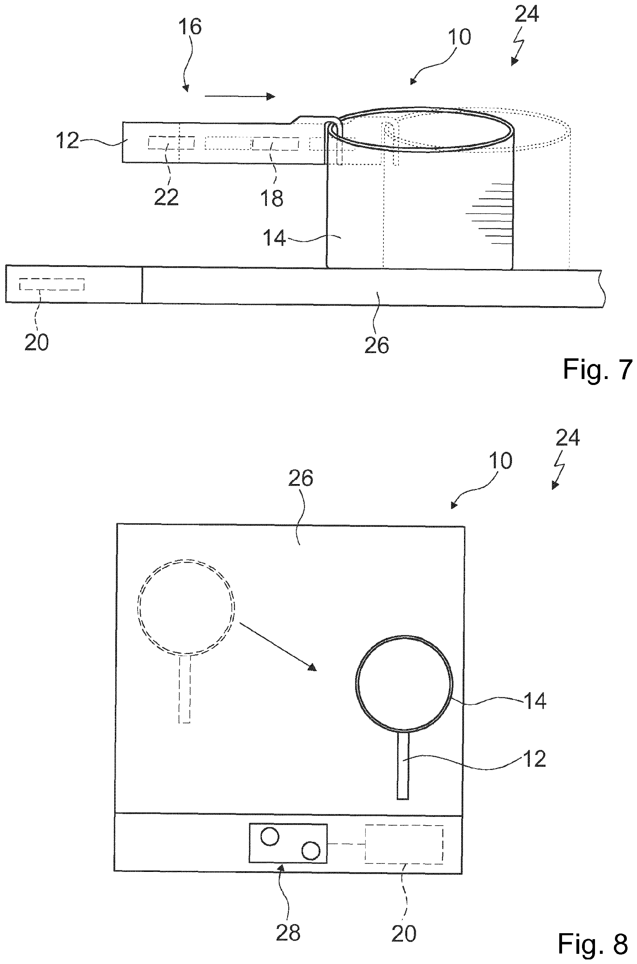

Wird das Bedienteil 12 unter Aufrechterhaltung einer Ausrichtung des Bedienteils 12 auf einer dem Gargeschirr 14 zugeordneten Heizzone um eine kleine Strecke in eine im Wesentlichen parallel zu der Ausrichtung des Bedienteils 12 ausgerichtete Richtung bewegt, so ändert die Kochfeld-Steuereinheit 20 eine Garzeit (vgl. Fig. 6 und Fig. 7). Bei einer derartigen Bewegung des Bedienteils 12 wird ein Verlassen einer dem Gargeschirr 14 zugeordneten Heizzone vermieden. Eine einer Bewegung des Bedienteils 12 zugeordnete Aktion ist als eine Änderung einer Garzeit ausgebildet. Bei einer Bewegung des Bedienteils 12 in Richtung des Gargeschirrs 14, wobei die Bewegung als eine Schubbewegung ausgebildet ist, erhöht die Kochfeld-Steuereinheit 20 die Garzeit (vgl. Fig. 6). Bei einer Bewegung des Bedienteils 12 in von dem Gargeschirr 14 wegweisender Richtung, wobei die Bewegung als eine Zugbewegung ausgebildet ist, verringert die Kochfeld-Steuereinheit 20 die Garzeit (vgl. Fig. 7). Wird das Bedienteil 12 unter Aufrechterhaltung einer Ausrichtung des Bedienteils 12 auf dem Gargeschirr 14 zugeordneten Heizeinheiten in einer Richtung senkrecht zu der Ausrichtung des Bedienteils 12 bewegt, so ändert die Kochfeld-Steuereinheit 20 einen Aktivierungszustand eines Hochtemperatursensors zu einer Überwachung eines Bratvorgangs. Hierbei wird von der Kochfeld-Steuereinheit 20 bei einem Überschreiten einer vorgegebenen Temperatur eine Deaktivierung von dem Gargeschirr 14 zugeordneten Heizeinheiten ausgeführt.

Wird mittels des Bedienteils 12 das Gargeschirr 14, mit dem das Bedienteil 12 verbunden ist, aus der dem Gargeschirr 14 zugeordneten Heizzone herausbewegt, so behält die Kochfeld-Steuereinheit 20 aufgrund einer von der Sensoreinheit 16 detektierten Bewegung des Bedienteils 12 dem Gargeschirr 14 zugeordnete Einstellungen, beispielsweise eine Heizleistungsdichte und/oder eine Garzeit, bei. Die Kochfeld-Steuereinheit 20 gibt in Abhängigkeit einer Detektion einer Bewegung des Gargeschirrs 14, mit dem das Bedienteil 12 verbunden ist, eine der Bewegung des Gargeschirrs 14 entsprechende Ausgabe mittels der Kochfeld-Bedieneinheit 28 an einen Bediener aus. Hierdurch ist ein Pfad, der von dem Gargeschirr 14 zurückgelegt wird, nachvollziehbar (vgl. Fig. 8). Die Kochfeld-Steuereinheit 20 gibt bei einer von der Kochfeld-Steuereinheit 20 ausgeführten, einer Bewegung des Bedienteils 12 zugeordneten Aktion mittels der Kochfeld-Bedieneinheit 28 eine Bestätigung an den Bediener aus. Beispielsweise ist die Bestätigung als optische und/oder akustische Ausgabe an den Bediener ausgebildet.

Zusätzlich ist denkbar, dass die Kochfeld-Steuereinheit in Abhängigkeit von einer Richtung, einer Geschwindigkeit und einer zurückgelegten Strecke des Gargeschirrs, mit dem das Bedienteil verbunden ist, zu einem Wechsel eines Betriebsmodus vorgesehen ist. Beispielsweise ist die Kochfeld-Steuereinheit dazu vorgesehen, bei einer raschen Bewegung des Bedienteils einen Betriebsmodus mit vordefinierten Heizleistungsdichten für jede der Heizeinheiten zu aktivieren. In diesem Betriebsmodus weist die Kochfeld-Steuereinheit den Heizeinheiten in Abhängigkeit einer Position der Heizeinheiten unterschiedliche, vordefinierte Heizleistungsdichten zu. Hierbei weisen Heizeinheiten in einem dem Bediener zuweisenden, vorderen Bereich eine höhere Heizleistungsdichte auf als Heizeinheiten in einem von dem Bediener wegweisenden, hinteren Bereich.

Alternativ zu einer Ausgestaltung, in der die Kochfeld-Steuereinheit zu einer Auswertung der von der Sensoreinheit detektierten Bewegung des Bedienteils vorgesehen ist, ist denkbar, dass die Sensoreinheit eine Auswerteeinheit zu einer Auswertung der von dem Beschleunigungssensor detektierten Bewegung des Bedienteils aufweist. Die Auswerteeinheit ist elektrisch mit dem Beschleunigungssensor verbunden. Die Auswerteeinheit ist dazu vorgesehen, in Abhängigkeit der von dem Beschleunigungssensor detektierten Bewegung des Bedienteils mittels des Sendemoduls Befehle an die Kochfeld-Steuereinheit zu übertragen. Die Auswerteeinheit und das Sendemodul sind im Wesentlichen einstückig ausgebildet. Alternativ könnten die Auswerteeinheit und das Sendemodul getrennt ausgebildet sein. Die Auswerteeinheit übermittelt in Abhängigkeit einer von dem Beschleunigungssensor detektierten Bewegung des Bedienteils unterschiedliche Befehle an die Kochfeld-Steuereinheit. Die Kochfeld-Steuereinheit führt in Abhängigkeit von von der Sensoreinheit übertragener Befehle unterschiedliche Aktionen aus.

Ebenfalls denkbar ist, dass die Sensoreinheit einen Kontaktsensor umfasst, der dazu vorgesehen ist, eine ordnungsgemäße Verbindung des Bedienteils mit dem Gargeschirr zu detektieren. Die Sensoreinheit übermittelt einen von dem Kontaktsensor detektierten Kontaktparameter an die Kochfeld-Steuereinheit. Die Kochfeld-Steuereinheit ist zu einer Auswertung des Kontaktparameters vorgesehen. Bei einer vorliegenden ordnungsgemäßen Verbindung des Bedienteils mit dem Geschirr ordnet die Kochfeld-Steuereinheit weitere, mittels der Kochfeld-Bedieneinheit eingegebene Betriebskenngrößen dem Gargeschirr, mit dem das Bedienteil verbunden ist, zu. Alternativ könnte die Kochfeld-Steuereinheit dazu vorgesehen sein, einen Bediener zu einer Eingabe mittels der Kochfeld-Bedieneinheit aufzufordern, beispielweise zu einer Bestätigung einer detektierten Position des Bedienteils und/oder zu einer Eingabe einer Betriebskenngröße.

### Bezugszeichen

- 10: Kochfeldvorrichtung
- 12: Bedienteil
- 14: Gargeschirr
- 16: Sensoreinheit
- 18: Beschleunigungssensor
- 20: Kochfeld-Steuereinheit
- 22: Sendemodul
- 24: Kochfeld
- 26: Platteneinheit
- 28: Kochfeld-Bedieneinheit

## Patentansprüche

1. Kochfeld mit einer Steuer- und/oder Regeleinheit und mit zumindest einer Kochfeldvorrichtung (10), welche zumindest ein Bedienteil (12), das dazu vorgesehen ist, zumindest in einem Betriebszustand mit zumindest einem Gargeschirr (14) verbunden zu sein, und wobei das Bedienteil (12) zumindest eine Sensoreinheit (16) aufweist, die dazu vorgesehen ist, zumindest in einem Betriebszustand zumindest eine Bewegung des Bedienteils (12) zu detektieren, wobei die Kochfeldvorrichtung (10) zumindest eine Kochfeld-Steuereinheit (20) aufweist, die zu einer Kommunikation mit zumindest einem Sendemodul (22) der Sensoreinheit (16) vorgesehen ist, wobei die Kochfeld-Steuereinheit (20) in der Steuer- und/oder Regeleinheit integriert ist, wobei das Bedienteil (12) zumindest im Wesentlichen als ein Gargeschirrhandgriff ausgebildet ist, **dadurch gekennzeichnet, dass** die Sensoreinheit (16) zumindest einen Beschleunigungssensor (18) zu einer Detektion der Bewegung des Bedienteils (12) aufweist.

2. Kochfeld nach Anspruch 1, **dadurch gekennzeichnet, dass** die Sensoreinheit (16) zumindest teilweise innerhalb des Bedienteils (12) angeordnet ist.

3. Kochfeld nach einem der vorhergehenden Ansprüche, **dadurch gekennzeichnet, dass** die Kochfeld-Steuereinheit (20) dazu vorgesehen ist, in Abhängigkeit einer von der Sensoreinheit (16) detektierten Bewegung des Bedienteils (12) unterschiedliche der Bewegung zugeordnete Aktionen auszuführen.

4. Kochfeld nach Anspruch 3, **dadurch gekennzeichnet, dass** zumindest eine der der Bewegung des Bedienteils (12) zugeordnete Aktionen als zumindest eine Leistungsveränderung und/oder zumindest eine Änderung einer Garzeit und/oder zumindest eine Änderung eines Aktivierungszustands einer dem Gargeschirr (14) zugeordneten Heizeinheit ausgebildet ist.

5. Kochfeld nach einem der vorhergehenden Ansprüche, **dadurch gekennzeichnet, dass** das Bedienteil (12) dazu vorgesehen ist, zumindest in einem Betriebszustand abnehmbar mit dem Gargeschirr (14) verbunden zu sein.

## Claims

1. Hotplate having a control and/or regulation unit and having at least one hotplate device (10), which has at least one operating element (12), which at least in one operating state is provided to be connected with at least one item of cookware (14) and wherein the operating element (12) has at least one sensor unit (16), which at least in one operating state is provided to detect at least one movement of the operating element (12), wherein the hotplate device (10) has at least one hotplate control unit (20), which is provided for communication with at least one transmit module (22) of the sensor unit (16), wherein the hotplate control unit (20) is integrated in the control and/or regulation unit, wherein the operating element (12) is embodied at least substantially as a handle for an item of cookware, **characterised in that** the sensor unit (16) has at least one acceleration sensor (18) for detecting the movement of the operating element (12).

2. Hotplate according to claim 1, **characterised in that** the sensor unit (16) is arranged at least partially within the operating element (12).

3. Hotplate according to one of the preceding claims, **characterised in that** the hotplate control unit (20) is provided to execute different actions assigned to the movement as a function of a movement of the operating element (12) detected by the sensor unit (16).

4. Hotplate according to claim 3, **characterised in that** at least one of the actions assigned to the movement of the operating element (12) is embodied as at least one change in power and/or at least one change in a cooking time and/or at least one change in an activation state of a heating unit assigned to the item of cookware (14).

5. Hotplate according to one of the preceding claims, **characterised in that** the operating element (12) is provided at least in one operating state to be removably connected with the item of cookware (14).

## Revendications

1. Plaque de cuisson comprenant une unité de commande et/ou de régulation et au moins un dispositif pour plaque de cuisson (10), lequel comprend au moins une pièce de manipulation (12), qui est agencée de façon à être reliée, au moins dans un état de fonctionnement, à au moins un ustensile de cuisson (14), et
dans laquelle la pièce de manipulation (12) comprend au moins un élément de capteur (16), qui est configuré pour détecter au moins un déplacement de la pièce de manipulation (12) au moins dans un état de fonctionnement,
dans laquelle le dispositif pour plaque de cuisson (10) comprend au moins un élément de commande de plaque de cuisson (20), qui est configuré pour communiquer avec au moins un module d'émission (22) de l'élément de capteur (16), dans laquelle l'élément de commande de plaque de cuisson (20) est intégré dans l'unité de commande et/ou de régulation, et
la pièce de manipulation (12) est constituée au moins essentiellement sous forme d'une poignée d'ustensile de cuisson,
**caractérisée en ce que** l'élément de capteur (16) comprend au moins un capteur d'accélération (18) servant à détecter le déplacement de la pièce de manipulation (12).

2. Plaque de cuisson selon la revendication 1, **caractérisée en ce que** l'élément de capteur (16) est disposé au moins en partie à l'intérieur de la pièce de manipulation (12).

3. Plaque de cuisson selon l'une des revendications précédentes, **caractérisée en ce que** l'élément de commande de plaque de cuisson (20) est configuré pour exécuter différentes actions associées au déplacement en fonction d'un déplacement de la pièce de manipulation détecté par l'élément de capteur (16).

4. Plaque de cuisson selon la revendication 3, **caractérisée en ce qu'**au moins une des actions associées au déplacement de la pièce de manipulation (12) est conçue sous forme d'au moins une modification de puissance et/ou au moins une modification d'un temps de cuisson et/ou au moins une modification d'un état d'activation d'un élément chauffant affecté à l'ustensile de cuisson (14).

5. Plaque de cuisson selon l'une des revendications précédentes, **caractérisée en ce que** la pièce de manipulation (12) est configurée, au moins dans un état de fonctionnement, pour être connectée de façon amovible à l'ustensile de cuisson (14).
